Europäisches Patentamt

European Patent Office

Office européen des brevets

(11) Veröffentlichungsnummer: **0 269 572 B1**

## (12) EUROPÄISCHE PATENTSCHRIFT

(45) Veröffentlichungstag der Patentschrift: 02.10.91

(51) Int. Cl.⁵: **B01D 53/22**, B01D 53/36

(21) Anmeldenummer: **87810683.0**

(22) Anmeldetag: **20.11.87**

(54) Verfahren und Einrichtung zur Aufbereitung eines Kohlenwasserstoff-Luftgemisches.

(30) Priorität: 21.11.86 DE 3639847
04.04.87 DE 3711482

(43) Veröffentlichungstag der Anmeldung:
01.06.88 Patentblatt 88/22

(45) Bekanntmachung des Hinweises auf die
Patenterteilung:
02.10.91 Patentblatt 91/40

(84) Benannte Vertragsstaaten:
AT BE CH DE ES FR GB GR IT LI LU NL SE

(56) Entgegenhaltungen:
EP-A- 0 222 158
DE-A- 2 911 501
DE-A- 3 005 666
DE-A- 3 118 455

(73) Patentinhaber: **Schwefer, Hans Jürgen**
**Emmi-Welter-Strasse 4**
**W-5100 Aachen(DE)**

(72) Erfinder: **Schwefer, Hans Jürgen**
**Emmi-Welter-Strasse 4**
**W-5100 Aachen(DE)**

(74) Vertreter: **Liermann, Manfred**
**Schillingsstrasse 335**
**W-5160 Düren(DE)**

## Beschreibung

Die Erfindung betrifft ein Verfahren zur Aufbereitung eines Kohlenwasserstoff-Luftgemisches.

An sich sind Aufspaltungen von Gasgemischen, insbesondere mit einem Membranmodul, bereits bekannt, z. B. aus der DE-A-33 38 618 oder der DE-C-17 19 557. Weiterhin ist ein solches Verfahren, daß sich eines Membranmoduls bedient, aus der europäischen Veröffentlichung EP-A-171 879 bekannt. Mit den genannten Einrichtungen des Standes der Technik und dem zum Betrieb dieser Einrichtungen gehörigen Verfahren lassen sich Kohlenwasserstoff-Luftgemische nicht so weit voneinander trennen, daß als eine abgetrennte Komponente Luft befriedigender Reinheit entsteht. Wenn die Kohlenwasserstoffe im Kohlenwasserstoff-Luftgemisch z. B. aus Benzin stammen, so wird als Endergebnis eine Abluft angestrebt, in der weniger als 150mg/$m_N^3$ Kohlenwasserstoff enthalten sind, wobei in diesem $m_N^3$ Abluft gleichzeitig weniger als 5 mg Benzol ($C_6H_6$) enthalten sein sollen. Solche Werte können mit den bekannten, ein Membranmodul verwendenden Einrichtungen und Verfahren nicht erreicht werden.

Es sind aber auch mit der DE-C-33 45 944 - A 1 und mit dem Aufsatz "Katalytische Oxidationsverfahren zur Luftreinhaltung", in: Luftreinhaltung, H. Schuermann, 12.1985, katalytische und biologische Oxidationsverfahren bekannt geworden, die auch zur Aufbereitung des genannten Gemisches geeignet sind und sehr gute Ergebnisse erreichen. Diesen Einrichtungen wird das belastete Gasgemisch von der dieses Gasgemisch erzeugenden Einrichtung unmittelbar zugeleitet und in diesem Zustand aufbereitet. Besonders bei hochbelasteten Gemischen müssen diese Einrichtungen, insbesondere dann, wenn große Mengen verarbeitet werden müssen, unangenehm groß sein und haben häufig einen hohen Fremdenergiebedarf. Nachteilig ist weiter, daß die aus dem Gemisch entfernten Stoffe verloren sind.

Weiter ist mit der EP-A-222 158 ein Verfahren bekannt geworden, bei dem ein kohlenwasserstoffhaltiges Gemisch in zwei aufeinander folgenden Stufen gereinigt wird, wobei die nach der ersten Reinigungsstufe noch verbleibenden Verunreinigungen in der zweiten Reinigungsstufe verbrannt werden, wobei die dabei freiwerdende Energie zum Betrieb der ersten Reinigungsstufe verwendet wird. Dies aber bedeutet, daß erhebliche Mengen Kohlenwasserstoffe die erste Reinigungsstufe passieren müssen. Diese Menge soll so groß sein, daß vorzugsweise eine Wärmekraftmaschine bedient werden kann. Das abgetrennte Gemisch muß somit zündfähig sein, was eine erhebliche Gefahr bedeutet. Darüberhinaus sind die Abgase der Wärmekraftmaschine immer noch unzulässig hoch belastet, so daß das gewünschte Reinigungsziel nicht erreicht wird.

Weiter ist mit der DE-A-30005 666 ein Verfahren bekannt geworden, bei dem ein ankommendes Kohlenwasserstoffgemisch durch die zusätzliche Zuführung von Brenngas inertisiert wird, worauf das Gemisch einer Adsorptionseinrichtung zugeleitet wird, von der das zusätzlich zugeführte Brenngas nicht adsorbiert wird. Der inertisierte Gesamtstrom wird also nur soweit gereinigt, daß ein zündfähiges Gemisch übrig bleibt, daß in einer Brennkammer verbrannt wird. Es wird also nur eine bestimmte Sorte von Kohlenwasserstoffen zurückgewonnen, während mindestens eine weitere Sorte, die in einem hochbelasteten Gemisch enthalten ist, einer Verbrennungseinrichtung zugeführt und dort verbrannt wird und damit verloren geht. Die bei dieser Verbrennung entstehende Abluft ist immer noch unzulässig hoch belastet.

Der Erfindung liegt damit die Aufgabe zugrunde, ein Verfahren der eingangs beschriebenen Art vorzuschlagen, mit dem ein sehr hoher Reinheitsgrad der Abluft insbesondere bei hochbelasteten Gemischen als Ausgangsmedium erreicht wird. Der Verfahrensablauf soll gleichzeitig so gestaltet sein, daß er den Bau einer zur Durchführung geeigneten Anlage hoher spezifischer Leistung zur Verarbeitung auch großer Gemischmengen sowie die mindestens teilweise Rückgewinnung getrennter Komponenten erlaubt und es soll eine Anlage zur Durchführung des Verfahrens vorgeschlagen werden.

Verfahrensmäßig ist diese Aufgabe bei einem Verfahren der eingangs beschriebenen Art dadurch gelöst, daß das Ausgangsgemisch in ein kohlenwasserstoffreiches und ein kohlenwasserstoffarmes Gemisch mit Hilfe eines Membranmoduls aufgetrennt wird, und daß man nachfolgend das kohlenwasserstoffarme Gemisch entweder durch katalytische Oxidation oder durch biologische Oxidation, oder durch eine Kombination beider Oxidationsmöglichkeiten zu Kohlendioxyd, Wasser sowie Restluft abbaut. Durch die Nachschaltung einer Oxidation des kohlenwasserstoffarmen Gemisches nach der ersten Auftrennung in ein kohlenwasserstoffreiches und in ein kohlenwasserstoffarmes Gemisch wird eine weitere erhebliche Verbesserung mit einfachen Mitteln erreicht. Die Nachoxidation sorgt dafür, daß der größte Teil der noch vorhandenen Kohlenwasserstoffe umgebaut wird in Kohlendioxyd und Wasser - beides problemlose Verbindungen - und sehr reiner Abläuft. Die katalytische Oxidation ist sehr wirksam und gerätetechnisch einfach zu realisieren. Sie ist hinsichtlich der zu verarbeitenden Mengen mit bescheidener Baugröße durchführbar. Auch mit der biologischen Oxidation ist ein ausgezeichnetes Ergebnis erzielbar, auch bezüglich der zu verarbeitenden Mengen in Relation zur Größe des aparativen Aufwandes. Die biologische Oxidation hat darüberhinaus den manchmal erwünschten Vorteil, daß sie relativ kalt abläuft.

Es kann auch vorteilhaft sein, eine Kombination beider Oxidationsmöglichkeiten durchzuführen, derart, daß in Reihe eine katalytische und biologische Oxidation durchgeführt wird. Hierdurch können spezielle, katalytisch nicht einfach umsetzbare Stoffe noch behandelt werden.

Es ist außerdem nach der Erfindung noch vorgesehen, daß man das Retentat vor der Oxidation erwärmt. Sowohl bei der biologischen als auch bei der katalytischen Oxidation wird hierdurch der Oxidationsprozeß gestartet. Bei der katalytischen Oxidation, die bei etwa 300 bis 400° abläuft, kann dann später die im Abgas vorhandene Wärme über einen Wärmetauscher wieder verwendet werden um das dem Katalysator zugeführte Gemisch aufzuheizen. Bei der biologischen Oxidation, die bei 20 bis 30° abläuft, ist naturgemäß nur eine sehr geringfügige Anfangserwärmung erforderlich, vorzugsweise dann, wenn das ankommende Ausgangsgemisch, wie z. B. im Winter bei Außenleitungen, sehr kalt ist. Liegt die Umgebungstemperatur und die Temperatur des Ausgangsgemisches bei etwa 20°, so kann ohne Nachteile auf eine Vorerwärmung des Ausgangsgemisches vor Einleitung der biologischen Oxidation ganz verzichtet werden.

Eine wichtige Ergänzung wird nach der Erfindung darin gesehen, daß man die Trennung des Gemisches so durchführt, daß sowohl die kohlenwasserstoffreiche als auch die kohlenwasserstoffarme Phase nicht zündfähig ist. Dies ist besonders wichtig für die Aufbereitung von brennbaren Dämpfen wie z.B. Bezinmdämpfe. Die Einhaltung dieser Bedingung erhöht die Explosionssicherheit beim Betrieb einer zur Durchführung des erfindungsgemäßen Verfahrens geeigneten Anlage, eine ganz entscheidende Voraussetzung bei der Aufbereitung brennbarer Dämpfe.

Die Aufgabe, eine Anlage zur Durchführung des Verfahrens zu gestalten, ist bei einer gattungsgemäßen Anlage dadurch gelöst, daß sie eine Einrichtung zur Trennung eines eingeleiteten Kohlenwasserstoff-Luftgemisches in ein kohlenwasserstoffreiches und -armes Gemisch aufweist, deren kohlenwasserstoffarme Seite dieser Einrichtung mit Einrichtungen zur Durchführung einer Oxidation des dort austretenden Gemisches verbunden ist. Hierbei kann sich bei guter Leistung ein günstiger Aufbau einer solchen Anlage dann ergeben, wenn die Einrichtung zur Trennung mindestens ein Membranmodul aufweist. Es wird bei guter Durchsatzleistung durch die semipermeable Wand des Membranmoduls auch bereits, insbesondere bei ausreichendem Vakuum auf der Permeatseite, eine gute Auftrennung erreicht. Das entstehende kohlenwasserstoffarme Gemisch ist bereits relativ sauber und wird durch die nachfolgenden Einrichtungen, mit denen die Oxidation dieses Gemisches durchgeführt wird, in gewünschter Weise weiter verbessert. Dies kann insbesondere unter dem Aspekt des Explosionsschutzes problemlos geschehen, da mit der Erfindung erreicht wird, daß das Gemisch auf der kohlenwasserstoffreichen und -armen Seite so gehalten werden kann, daß es nicht zündfähig ist. Hierzu genügt z.B. bei Einsatz eines Membranmoduls lediglich ausreichendes Vakuum auf der Permeatseite.

Ergänzend wird nach der Erfindung vorgeschlagen, daß die genannte Einrichtung zur Oxidation ein Katalysator (6) ist. Mit einem Katalysator, der als solcher bereits bekannt ist, werden bei relativ kleiner Baugröße gute Durchsatzleistungen erzielt.

Aber auch, wie weiter nach der Erfindung noch vorgeschlagen ist, bei der Anwendung eines Bio-Reaktors zu Durchführung der notwendigen Oxidation wird die gewünschte Qualität der Abluft erreicht und es läuft gleichzeitig die Oxidation "kalt" ab.

Wie außerdem nach der Erfindung vorgeschlagen ist, kann auch dem Membranmodul ein Katalysator und diesem nachgeschaltet ein Bio-Reaktor vorgesehen sein. Hierdurch kann bei gleichzeitiger Durchsatzsteigerung eine weitere Verbesserung der Abluft erreicht werden.

Ergänzend ist dann noch vorgeschlagen, daß dem Katalysator ein Wärmetauscher zur Entnahme von Prozeßwärme nachgeschaltet ist. Da die Oxidation im Katalysator "heiß" abläuft kann die auf der Abluftseite des Katalysators ankommende Wärme im Wärmetauscher umgesetzt und verwendet werden, um das kohlenwasserstoffarme Gemisch vor Eintritt in den Katalysator im notwendigen Umfang zu erwärmen. Es bedarf dann nicht mehr der Fremdwärmezufuhr.

Auch ist noch vorgeschlagen, daß dem Katalysator bzw. dem Bio-Reaktor ein Wärmetauscher zur Erwärmung des kohlenwasserstoffarmen Gemisches vorgeschaltet ist. Im Falle des Bio-Reaktors ist dies ein Wärmetauscher, der über Zufuhr von Fremdwärme das genannte Gemisch, falls erforderlich, aufwärmt vor Eintritt in den Bio-Reaktor. Im Falle des Katalysators kann dies ein Wärmetauscher sein, der über Fremdwärme das Gemisch soweit vor Eintritt in dem Katalysator aufheizt, daß dort die katalytische Oxidation stattfinden kann. Nach dem Start entsteht hierbei soviel Wärme, daß die Prozeßwärme selbst benutzt werden kann zur Aufheizung des kohlenwasserstoffarmen Gemisches.

Es ist weiter noch vorgeschlagen, daß die Seite des Membranmoduls, aus der das kohlenwasserstoffreiche Gemisch austritt, mit einer Vakuumpe verbunden ist. Die Vakuumpumpe sorgt bei atmosphärischem Druck des Ausgangsgemisches oder bei Überdruck des Ausgangsgemisches mit einfachen Mitteln für ein außerordentlich großes Druckverhältnis des Eingangsdruckes zum Ausgangsdruck. Hierdurch wird die Leistung des Membranmoduls verbessert.

Verfahren und Anlage sollen anhand der beigefügten Zeichnungen, die die prinzipielle Verschaltung der einzelnen Elemente miteinander als Ausführungsbeispiel zeigen, näher erläutert werden.

Es zeigen:

Figur 1:   Prinzipaufbau einer erfindungsgemäßen Anlage für katalytische Oxidation

Figur 2:   Prinzipaufbau einer erfindungsgemäßen Einrichtung für biologische Oxidation

Figur 3:   Prinzipaufbau einer erfindungsgemäßen Einrichtung für kombinierte oder alternative katalytische und biologische Oxidation.

Über eine Eingangsleitung 13 wird einem an sich bekannten Membranmodul 1 ein Kohlenwasserstoffluftgemisch, vorzugsweise ein Benzinluftgemisch, zugeführt. Über eine Leitung 11 einerseits und eine Leitung 12 andererseits wird kohlenwasserstoffreiches Gemisch - nachfolgend Permeat genannt - von der Seite 3 des Membranmoduls bzw. kohlenwasserstoffarmes Gemisch - nachfolgend Retentat genannt - von der Seite 5 des Membranmoduls 1 abgeführt. Auf der Permeatseite 3 liegt in der Leitung 11 eine Vakuumpumpe 4, die für das notwendige Druckgefälle an der semipermeablen Wand des Membranmoduls 1 sorgt. Bei ausreichendem Druckgefälle wird ein Permeat das zu fett und ein Retentat das zu mager ist um zündfähig zu sein erreicht. Dies ist ein besonderer Vorteil, der weitere Maßnahmen zur Explosionsverhinderung überflüssig machen kann. Das entstandene kohlenwasserstoffreiche Permeat kann dann über einen Verdichter 14, der in der Leitung 11 der Vakuumpumpe 4 nachgeordnet ist, verdichtet und damit wieder verflüssigt werden und in einen Vorratsbehälter 15 hineingepumpt werden. Dies kann auch unter Einsatz einer Kälteeinrichtung durchgeführt werden.

Auf der Retentatseite 5 tritt kohlenwasserstoffarmes Retentat aus, das über die Leitung 12 einem Katalysator 6 zugeführt wird. Innerhalb des Katalysators wird das Retentat katalytisch bei einer Temperatur von 300 bis 400 °C oxidiert, wodurch Kohlendioxyd und Wasser einerseits und Restluft andererseits entsteht. Um die katalytische Oxidation in Gang zu setzen kann auf der Eingangsseite des Katalysators in der Leitung 12 ein Wärmetauscher 9 vorgesehen sein, der über Zufuhr von Fremdwärme das Retentat im notwendigen Umfang aufheizt.

Auf der Ausgangsseite des Katalysators ist das austretende Medium sehr warm, so daß auch dort ein Wärmetauscher 8 vorgesehen sein kann, der dem austretenden Medium Wärme entzieht und über die Leitung 12 dem Retentat zuführt, so daß dann, wenn der Oxidationsprozeß einmal in Gang gekommen ist, der Wärmetauscher 9 und die Zufuhr von Fremdwärme nicht mehr erforderlich ist.

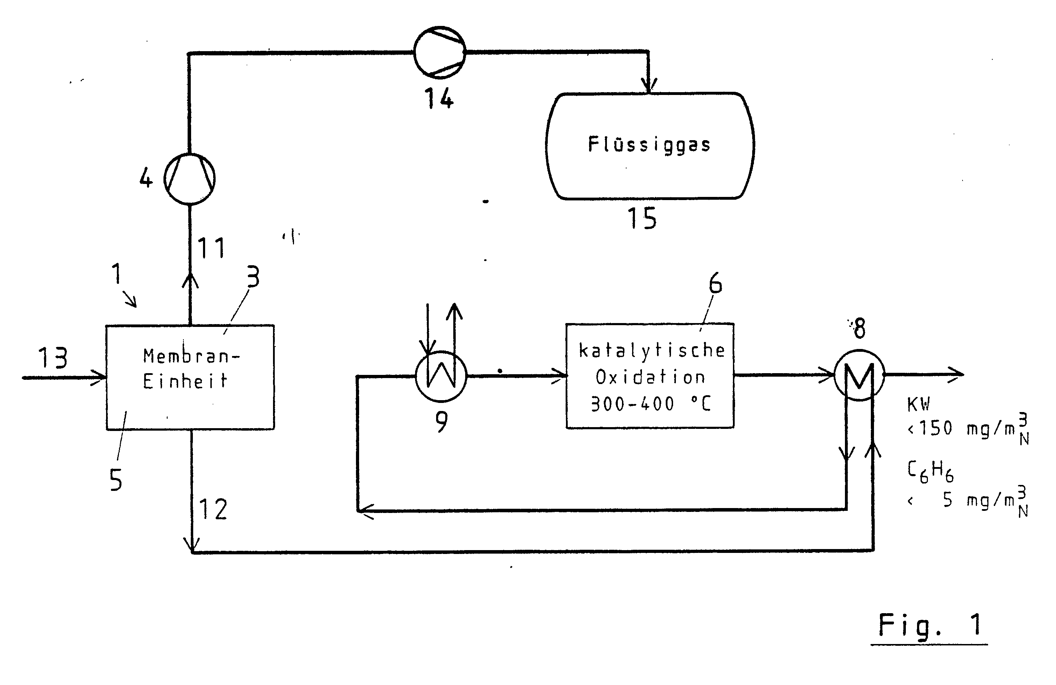

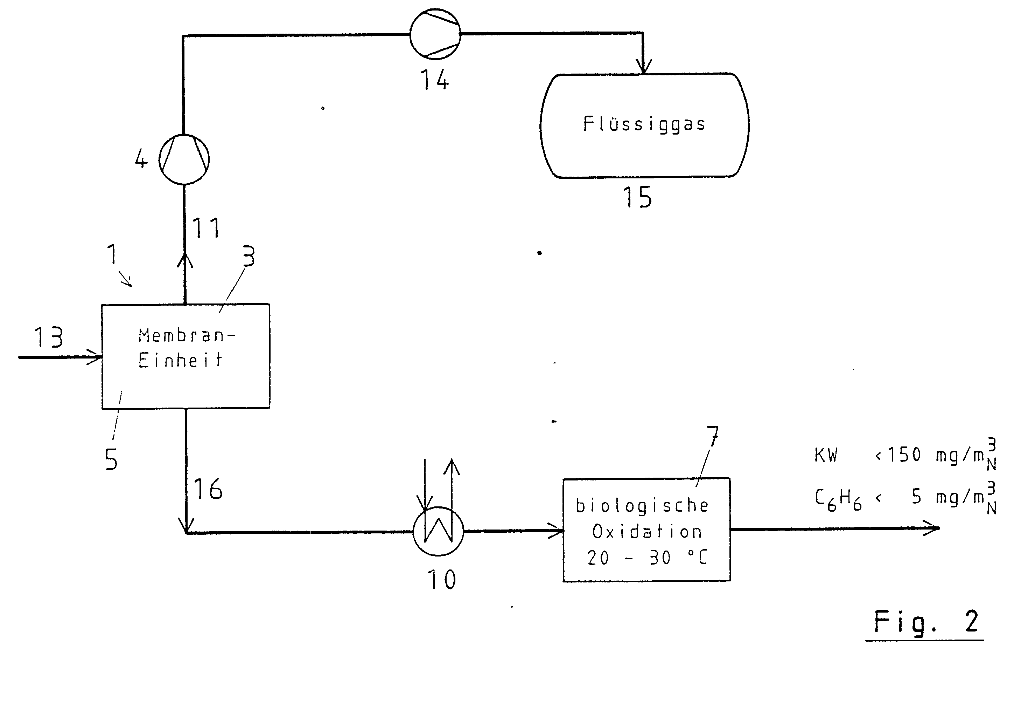

Figur 2 zeigt eine Anlage, die in ihrem Aufbau auf der Permeatseite 3 identisch ist mit dem nach Figur 1. Die Retentatseite 5 des Membranmoduls 1 weist jedoch eine Leitung 16 für das Retentat auf, die die Retentatseite 5 des Membranmoduls 1 mit einem Bio-Reaktor 7 verbindet, so daß das Retentat durch diesen Bio-Reaktor 7 hindurchgeführt wird. Im Bio-Reaktor 7 findet eine biologische Oxidation bei Temperaturen von etwa 20 bis 30 °C statt. Wenn das Retentat mit einer zu niedrigen Temperatur für den Ablauf der biologischen Oxidation ankommt, kann es über einen in der Leitung 16 liegenden Wärmetauscher 10 und über eine Zufuhr von Fremdwärme im notwendigen Umfang erwärmt werden.

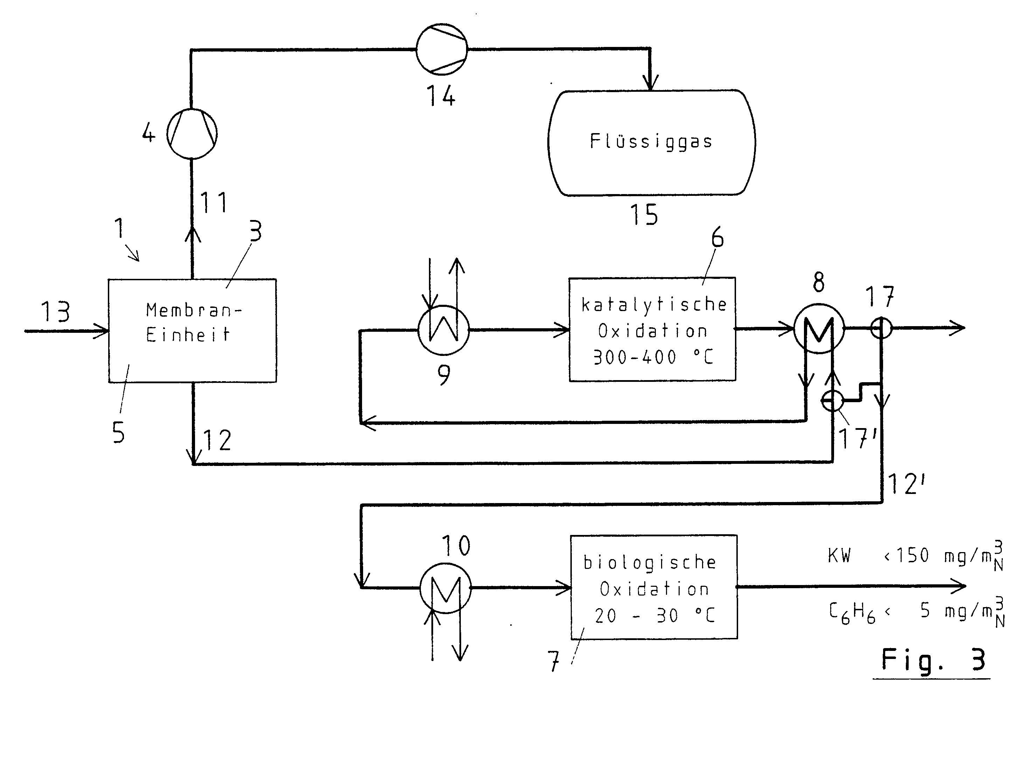

In Figur 3 ist eine Ausführungsform einer erfindungsgemäßen Anlage gezeigt, in der bei Bedarf oder auch ständig sowohl eine katalytische als auch eine biologische Oxidation durchgeführt werden kann. Auch hier ist der Aufbau der Anlage auf der Permeatseite 3 des Membranmoduls 1 wieder gleich mit dem bereits zu Figur 1 beschriebenen Aufbau. Dies gilt ebenfalls für den Bereich der katalytischen Oxidation.

Der katalytischen Oxidation nachgeordnet ist jedoch bei einer Anlage nach Figur 3 noch eine biologische Oxidation. Hierbei kann die Anlage so aufgebaut sein, daß die biologische Oxidation grundsätzlich der katalytischen Oxidation folgt. Sie kann aber auch so ausgebildet sein, daß bei Bedarf die Stufe der biologischen Oxidation beispielsweise über ein Ventil 17 zugeschaltet wird. Wenn der katalytischen Oxidation eine biologische Oxidation folgt, dann wird das den Katalysator verlassende Medium ggf. nach ausreichender Entwärmung im Wärmetauscher 8 über die Leitung 12' dem Bio-Reaktor 7 zugeführt. Im Bio-Reaktor wird dann das Medium, das den Katalysator verlassen hat, biologisch oxidiert. Hierbei kann in der Leitung 12' vor dem Bio-Reaktor 7 noch ein Wärmetauscher 10 vorgesehen sein, um in besonderen Fällen bei Bedarf noch Fremdwärme oder Startwärme von außen zuzuführen oder um Wärme abzuführen.

Natürlich kann bei einer solchen Anlage in der Leitung 12 vor dem Wärmetauscher 8 ein weiteres Ventil 17' vorgesehen sein, so daß bei entsprechender Betätigung der Ventile 17 und 17' die Anlage wahlweise über katalytische Oxidation, biologische Oxidation oder mit beidem betrieben werden kann. Die Ventile legen hierbei die Leitungen so, daß entweder der Katalysator oder der Bio-Reaktor in Betrieb ist oder beides in Reihe geschaltet ist.

Mit dem beschriebenen Verfahren und der beschriebenen Anlage gelingt es einerseits einen hohen Anteil Kohlenwasserstoffe aus dem Ausgangsgemisch wieder zurückzugewinnen und es gelingt andererseits mit verhältnismäßig einfachen Mitteln die gewünschte Verbesserung des Reinheitsgrades der Abluft zu erreichen. Neben dem rückgewonnenen Kohlenwasserstoff, das im Flüssiggastank 15 gesammelt werden kann, fällt hierbei neben der sauberen Ablauft, die gewonnen werden soll, lediglich noch das unschädliche Kohlendioxyd und Wasser an.

Da den Oxidationseinrichtungen innerhalb der Anlage nur gering belastete Gemische zugeführt werden, können diese trotz hohen Anlagendurchsatzes klein gehalten werden und es besteht nur ein geringer Fremdenergiebedarf. Explosionsgefahr kann auch bei Belastung des aufzubereitenden Gemisches mit brennbaren Bestandteilen sicher verhindert werden. Wird z.B. anstelle einer Membraneinheit eine Kälteeinrichtung eingesetzt, so kann durch Unterkühlung soviel Kondensat dem Gemisch entnommen werden, daß der zur Oxidation weitergeführte Gasteil nicht mehr zündfähig ist.

Es sei vorsorglich darauf hingewiesen, daß die Begriffe Permeat und Retentat nicht bei jeder technischen Ausführung des Membranmoduls den hier verwendeten Sinn haben müssen. Es steht nur in dieser Beschreibung Permeat für konienwasserstoffreiches Gemisch und Retentat für kohlenwasserstoffarmes Gemisch.

## Patentansprüche

1. Verfahren zur Aufbereitung eines Kohlenwasserstoff-Luftgemisches, dadurch gekennzeichnet, daß das Ausgangsgemisch in ein kohlenwasserstoffreiches und in ein kohlenwasserstoffarmes Gemisch mit Hilfe eines Membranmoduls (1) aufgetrennt wird und daß man nachfolgend das kohlenwasserstoffarme Gemisch entweder durch katalytische Oxidation oder durch biologische Oxidation oder durch eine Kombination beider Oxidationsmöglichkeiten zu Kohlendioxyd, Wasser sowie Restluft abbaut.

2. Verfahren nach Anspruch 1, dadurch gekennzeichnet, daß man das Retentat vor der Oxidation erwärmt.

3. Verfahren nach Anspruch 1 oder 2, dadurch gekennzeichnet, daß man die Trennung des Gemisches so durchführt, daß sowohl die kohlenwasserstoffreiche als auch die kohlenwasserstoffarme Phase nicht zündfähig ist.

4. Anlage zur Durchführung des Verfahrens nach Anspruch 1 bis 3, dadurch gekennzeichnet, daß sie aus einem Membranmodul (1) und entweder

a) einer Einheit (6) zur katalytischen Oxidation oder
b) einem Bioreaktor (7) zur biologischen Oxidation oder
c) einer Einheit (6) zur katalytischen Oxidation und einem nachgeschalteten Bioreaktor (7) besteht.

5. Anlage nach Anspruch 4a und 4c, dadurch gekennzeichnet, daß dem Katalysator (6) ein Wärmetauscher (8) zur Entnahme von Prozeßwärme nachgeschaltet ist.

6. Anlage nach Anspruchs 4a und 4c, dadurch gekennzeichnet, daß dem Katalysator (6) bzw. dem Bioreaktor (7) ein Wärmetauscher (9,10) zur Erwärmung des kohlenwasserstoffarmen Gemisches vorgeschaltet ist.

7. Anlage nach Anspruch 4a bis 4c, dadurch gekennzeichnet, daß die Seite (3) des Membranmoduls (1), aus der das kohlenwasserstoffreiche Gemisch austritt, mit einer Vakuumpumpe (4) verbunden ist.

## Claims

1. Method for processing a hydrocarbon/air mixture, characterised in that the initial mixture is separated into a hydrocarbon-rich mixture and a low-hydrocarbon mixture using a membrane module (1), and that subsequently the low-hydrocarbon mixture is broken down either by catalytic oxidation or by biological oxidation, or by a combination of the two methods of oxidation, into carbon dioxide, water and residual air.

2. Method as in claim 1, characterised in that the residue is heated prior to oxidation.

3. Method as in claim 1 or 2, characterised in that separation of the mixture is carried out in such a way that neither the hydrocarbon-rich phase nor the low-hydrocarbon phase is ignitible.

4. Apparatus for carrying out the method in claims 1 to 3, characterised in that it comprises a membrane module (1) and either

a) a unit (6) for catalytic oxidation, or
b) a bioreactor (7) for biological oxidation, or

c) a unit (6) for catalytic oxidation and a bioreactor (7) connected downstream thereof.

5. Apparatus as in claim 4a and 4c, characterised in that a heat exchanger (8) for removing process heat is connected downstream of the catalyzer (6).

6. Apparatus as in claim 4a and 4c, characterised in that a heat exchanger (9,10) for heating the low-hydrocarbon mixture is connected upstream of the catalyzer (6) or bioreactor (7) respectively.

7. Apparatus as in claim 4a to 4c, characterised in that the side (3) of the membrane module (1) from which the hydrocarbon-rich mixture emerges is connected to a vacuum pump (4).

**Revendications**

1. Procédé de traitement d'un mélange hydrocarbure-air, caractérisé par le fait que le mélange de départ est séparé en un mélange riche en hydrocarbure et en un mélange pauvre en hydrocarbure à l'aide d'un module de membranes (1), et que, par la suite, on décompose le mélange pauvre en hydrocarbure, soit par oxydation catalytique, soit par oxydation biologique, soit par une combinaison des deux possibilités d'oxydation, en dioxyde de carbone, eau ainsi qu'air restant.

2. Procédé selon la revendication 1, caractérisé par le fait qu'on réchauffe le rétentat avant l'oxydation.

3. Procédé selon la revendication 1 ou 2, caractérisé par le fait qu'on conduit la séparation du mélange de sorte que non seulement la phase riche en hydrocarbure, mais encore la phase pauvre en hydrocarbure, ne soient pas inflammables.

4. Installation pour la mise en oeuvre du procédé tel que défini à l'une des revendications 1 à 3, caractérisée par le fait qu'elle se compose d'un module de membranes (1) et ou bien :
   a) d'une unité (6) pour l'oxydation catalytique, ou bien
   b) d'un bioréacteur (7) pour l'oxydation biologique, ou bien
   c) d'une unité (6) pour l'oxydation catalytique, en aval duquel est monté un bioréacteur (7).

5. Installation selon la revendication 4a et 4c, caractérisée par le fait qu'en aval du catalyseur (6) est monté un échangeur de chaleur (8) pour le prélèvement de la chaleur du procédé.

6. Installation selon la revendication 4a et 4c, caractérisée par le fait qu'en amont du catalyseur (6) ou du bioréacteur (7), est monté un échangeur de chaleur (9, 10) pour le réchauffement du mélange pauvre en hydrocarbure.

7. Installation selon la revendication 4a à 4c, caractérisé par le fait que le côté (3) du module de membranes (1), duquel sort le mélange riche en hydrocarbure, est relié à une pompe à vide (4).

Fig. 1

Fig. 2

EP 0 269 572 B1

Fig. 3

Flüssiggas  15

14

4

11

13 → Membran-Einheit  1  3  5

12

9

katalytische Oxidation 300-400 °C  6

8  17

17'

12'

10

biologische Oxidation 20 - 30 °C  7

KW  < 150 mg/m$_N^3$

$C_6H_6$ <  5 mg/m$_N^3$